# EUROPÄISCHE PATENTSCHRIFT

(11) **EP 4 127 490 B1**
(45) Veröffentlichungstag und Bekanntmachung des Hinweises auf die Patenterteilung: **02.10.2024**
(21) Anmeldenummer: 21716311.2
(22) Anmeldetag: 29.03.2021
(51) Int. Cl.: F15B 21/00, B60T 17/00

(54) **BREMSVENTIL MIT DICHTEINRICHTUNG UND VERFAHREN HIERZU**
BRAKE VALVE HAVING A SEAL DEVICE AND METHOD THEREFOR
SOUPAPE DE FREINAGE DOTÉ D'UN DISPOSITIF D'ÉTANCHÉITÉ ET PROCÉDÉ ASSOCIÉ

(30) Priorität: 30.03.2020 DE 102020108757
(43) Veröffentlichungstag der Anmeldung: 08.02.2023
(73) Patentinhaber: ZF CV Systems Europe BV, 1170 Brüssel (BE)
(72) Erfinder: FUHRMANN, Ingo, 30855 Langenhagen (DE); RIEDIGER-JANISCH, Karl-Heinz, 30455 Hannover (DE); WEINACHT, Jan, 30455 Hannover (DE)
(74) Vertreter: Ohlendorf, Henrike
(86) Internationale Anmeldenummer: PCT/EP2021/058145
(87) Internationale Veröffentlichungsnummer: WO 2021/198174

(56) Entgegenhaltungen:
- EP-A2- 2 345 816
- WO-A1-00/15958
- DE-A1- 2 910 086

## Beschreibung

Die Erfindung betrifft ein Bremsventil für eine pneumatische Bremsanlage für Fahrzeuge gemäß Anspruch 1. Die Erfindung bezieht sich auf u.a. das Bremsventil mit mindestens einem Entlüftungspfad zum Entlüften des Bremsventils, wobei der Entlüftungspfad des Bremsventils eine Dichteinrichtung umfasst, die dazu ausgelegt ist, mindestens zwischen einem Normalzustand und einem Dichtzustand zu wechseln, sowie ein Verfahren zur Montage des Bremsventils, welches das Anordnen einer Dichteinrichtung in einer ersten Druckluftpassage des Bremsventils umfasst.

Die Erfindung betrifft ferner ein Verfahren zum Verhindern von Flüssigkeitseintritt in einen druckführenden Abschnitt eines Bremsventils gemäß Anspruch 20 und ein Verfahren zur Montage eines Bremsventils gemäß Anspruch 23, sowie die Verwendung einer Kugel zur Herstellung eines Dichtzustands eines Bremsventils gemäß Anspruch 24.

Häufig werden Pneumatikvorrichtungen der vorstehend beschriebenen Art in Umgebungen eingesetzt, in denen verschiedene Fremdmedien anwesend sein können. Insbesondere pneumatische Bremsanlagen und ihre Komponenten, wie Relaisventile, können Wasser aus ihrer Umgebung ausgesetzt sein, beispielsweise bei der Reinigung, beim Betrieb im oder nach Regen, bei Überschwemmungen oder beim gezielten Durchwaten von Gewässern.

Pneumatikvorrichtungen der eingangs beschriebenen Art weisen typischerweise pneumatische Verbindungen zu einer Umgebung der Pneumatikvorrichtung auf, beispielsweise um einen Überdruck aus einem druckführenden Abschnitt der Pneumatikvorrichtung zu entlüften, oder um einen Druckausgleich mit der Umgebung der Pneumatikvorrichtung durchzuführen. Eine solche pneumatische Verbindung zur Umgebung der Pneumatikvorrichtung kann jedoch Fremdmedien, die sich in der Umgebung befinden, das Eindringen in die Pneumatikvorrichtung erlauben. Insbesondere das Eindringen von Flüssigkeiten, wie beispielsweise Wasser, kann die Funktionalität der Pneumatikvorrichtung beeinträchtigen. So kann im Fall von pneumatischen Bremsanlagen ein Eindringen von Fremdmedien, insbesondere von Wasser, zu Korrosion oder beispielsweise durch das Gefrieren von Wasser zu einem kompletten Ausfall der Bremsanlage führen. Daher sind Maßnahmen zu treffen, um das ungewollte Eindringen von Fremdmedien zu erschweren oder bestenfalls zu verhindern.

Aus dem Stand der Technik sind Pneumatikvorrichtungen mit Dichteinrichtungen bekannt, die ein ungewolltes Eindringen von geringen Mengen an Spritzwasser bzw. Wasser unterhalb eines gewissen Pegels erschweren sollen. Unter anderem offenbaren GB 2 401 330 A, DE 10 2016 011 032 A1 und DE 28 29 290 A1 solche Pneumatikvorrichtungen.

WO00/15958A1 offenbart eine Ventilbaugruppe, umfassend ein Ventilgehäuse, das einen offenen Innenraum definiert; eine Einlassöffnung; ein Ventilsitz mit einer sich dadurch erstreckenden Auslassöffnung; und eine Schwimmerhalterung Region.

EP2345816A2 betrifft eine Entlüftungseinrichtung für einen Hydraulikzylinder, insbesondere eines Doppelkupplungsgetriebes, mit einem einen Einlass und einen Auslass aufweisenden, die Entlüftungseinrichtung durchsetzenden Strömungskanal, und einem den Auslass wenigstens in einer ersten Funktionsstellung freigebendes und in einer zweiten Funktionsstellung verschließendes Verschließelement.

DE2910086A1 offenbart ein Gerät zum Füllen und Entlasten einer eine begrenzte Flüssigkeitsmenge aufnehmbaren Hydraulikanlage.

Aufgabe der vorliegenden Erfindung ist es, den sicheren Betrieb eines Bremsventils für eine pneumatische Bremsanlage für Fahrzeuge der eingangs beschriebenen Art auch in Umgebungen zu ermöglichen, in denen große Mengen eines Fremdmediums, insbesondere Wasser, anwesend sind.

In einem ersten Aspekt wird die Aufgabe durch ein Bremsventil für eine pneumatische Bremsanlage für Fahrzeuge mit mindestens einem Entlüftungspfad zum Entlüften des Bremsventils entlang einer Ausströmrichtung gelöst, wobei der Entlüftungspfad ein durchströmbares erstes Volumen, eine erste Druckluftpassage und eine Dichteinrichtung umfasst. Die erste Druckluftpassage verbindet das erste Volumen pneumatisch mit einem druckführenden Abschnitt des Bremsventils. Die Dichteinrichtung ist dazu ausgelegt, mindestens zwischen einem Normalzustand und einem Dichtzustand zu wechseln.

Wenn ein Entlüften des Bremsventils erfolgt, wird Druckluft vom druckführenden Teil des Bremsventils durch die erste Druckluftpassage in das durchströmbare erste Volumen geleitet. Optional kann die Druckluft vom durchströmbaren ersten Volumen an eine Umgebung des Bremsventils geleitet werden. In bevorzugten Ausführungsformen umfasst das Bremsventil eine zweite Druckluftpassage, die das erste Volumen pneumatisch mit der Umgebung verbindet. Typischerweise ist der Entlüftungsvorgang von einem Überdruck, der im druckführenden Teil des Bremsventils im Vergleich zum ersten Volumen und/oder der Umgebung herrscht, getrieben. Die Ausströmrichtung ist entlang dem von der ausströmenden Druckluft beschriebenen Strömungsweg durch den Entlüftungspfad, ausgehend vom druckführenden Teil durch die erste Druckluftpassage bis hin zum ersten Volumen und optional bis hin zur Umgebung des Bremsventils, definiert.

Die Einströmrichtung ist der Ausströmrichtung entgegengesetzt und erstreckt sich entlang des Entlüftungspfads, ausgehend vom ersten Volumen durch die erste Druckluftpassage hin zum druckführenden Teil des Bremsventils. Optional erstreckt sich die Einströmrichtung von der Umgebung ausgehend durch das erste Volumen, die erste Druckluftpassage und hin zum druckführenden Teil des Bremsventils.

Im Normalzustand ist die erste Druckluftpassage sowohl in der Ausströmrichtung als auch in der Einströmrichtung durchströmbar. Somit kann es vorteilhaft möglich bleiben, dass ein eventuell gewünschter geringer Druckausgleich von höherem Druck im ersten Volumen und/oder der Umgebung zum druckführenden Teil des Bremsventils entlang der Einströmrichtung stattfinden kann. Jedenfalls ermöglicht der Normalzustand ein ungehindertes Entlüften entlang der Ausström richtung.

Im Dichtzustand ist die erste Druckluftpassage nur in der Ausströmrichtung durchströmbar, nicht aber in der Einströmrichtung, wobei die Dichteinrichtung im Dichtzustand die Funktion eines Rückschlagventils erfüllt und in diesem Zustand ein Rückschlagventil bildet. Hierdurch kann ein unerwünschtes Eindringen von Fremdmedien in den druckführenden Teil des Bremsventils entlang der Einströmrichtung verhindert werden.

Im Normalbetrieb des Bremsventils, der beispielsweise dann vorliegt, wenn die Umgebungsbedingungen ein Eindringen von Fremdmedium aus dem ersten Volumen und/oder der Umgebung in den druckführenden Teil des Bremsventils mit hinreichender Wahrscheinlichkeit ausschließen, befindet sich die Dichteinrichtung im Normalzustand. Die erste Druckluftpassage kann frei durchströmt werden. Beispielsweise kann so, wie vorstehend beschrieben, ein vorteilhafter Druckausgleich entlang der Einströmrichtung möglich sein.

Erst in einem besonderen Betriebszustand, in dem beispielsweise mit einem Eindringen von Fremdmedium aus dem ersten Volumen und/oder der Umgebung in den druckführenden Teil gerechnet werden muss, wechselt die Dichteinrichtung in den Dichtzustand. Dieser ermöglicht wie vorstehend beschrieben weiterhin das Entlüften des Bremsventils, verhindert jedoch den unerwünschten Eintritt von Fremdmedium in den druckführenden Teil des Bremsventils.

In einer bevorzugten Ausführungsform ist die Dichteinrichtung dazu ausgelegt, wenn ein Fremdmedium, insbesondere eine Flüssigkeit, im ersten Volumen einen Schwellenwert überschreitet, vom Normalzustand in den Dichtzustand zu wechseln. Der Schwellenwert kann so bestimmt sein, dass die Anwesenheit von Fremdmedium am oder unterhalb des Schwellenwerts den Normalbetrieb des Bremsventils definiert, und die Anwesenheit von Fremdmedium oberhalb des Schwellenwerts den besonderen Betriebszustand definiert. Beispielsweise kann der Schwellenwert eine Höhe einer im ersten Volumen befindlichen Flüssigkeitssäule sein. Somit kann es möglich sein, sicherzustellen, dass die Dichteinrichtung im besonderen Betriebszustand zuverlässig in den Dichtzustand wechselt. Insbesondere ist das Fremdmedium Wasser. Unter den Begriff Wasser sollen im Folgenden auch wässrige Flüssigkeit und Mischfluide verstanden werden, die überwiegend oder zu einem großen Teil Wasser enthalten, wie z.B. Schlamm, Moor- oder Sumpfwasser.

Bevorzugt ist die Dichteinrichtung in der ersten Druckluftpassage angeordnet. Ferner ist es bevorzugt, dass die Dichteinrichtung einen Dichtkörper und einen Dichtungssitz umfasst, wobei der Dichtkörper dazu ausgelegt ist, im Dichtzustand dichtend an dem Dichtungssitz anzuliegen. Insbesondere ist der Dichtkörper dazu ausgelegt, auf Wasser schwimmfähig zu sein. Es soll jedoch verstanden werden, dass ein Dichtkörper gemäß der vorliegenden Erfindung auch auf gasförmigen Fremdmedien schwimmfähig sein kann. Vorzugsweise weist der Dichtkörper eine mittlere Dichte von 900 kg/m³ oder weniger, von 800 kg/m³ oder weniger, von 700 kg/m³ oder weniger, besonders bevorzugt von 600 kg/m³ oder weniger auf. Die mittlere Dichte des Dichtkörpers kann in geeigneter Weise angepasst werden, wenn das Eindringen anderer Fremdmedien als Wasser verhindert werden soll. Falls der Dichtkörper auf Wasser, oder einem anderen Fremdmedium, schwimmfähig ist, d. h. seine mittlere Dichte geringer als die von Wasser oder dem anderen Fremdmedium ist, so kann vorteilhaft ein Überschreiten des Schwellenwerts durch das Fremdmedium dazu führen, dass die resultierende Auftriebskraft den Dichtkörper gegen den Dichtungssitz presst.

Bevorzugt weist der Dichtungssitz oder ein Abschnitt von diesem in Ausströmrichtung stromabwärts eine Normale auf, die zumindest eine Komponente hat, die parallel und gleichgerichtet zur Ausströmrichtung im Bereich der Dichteinrichtung ist. In anderen Worten ausgedrückt, das Skalarprodukt zwischen dieser Normalen und der Ausströmrichtung im Bereich der Dichteinrichtung ist größer Null. Ferner ist es bevorzugt, dass der Dichtkörper in Ausströmrichtung stromabwärts von dem Dichtungssitz angeordnet ist.

In einer bevorzugten Ausführungsform ist der Dichtkörper zwischen einer ersten Position und einer zweiten Position beweglich, wobei der Dichtkörper im Normalzustand die erste Position, und im Dichtzustand die zweite Position einnimmt. Dabei liegt der Dichtkörper in der ersten Position dichtend am Dichtungssitz an und bildet so zusammen mit dem Dichtungssitz ein Rückschlagventil. In der zweiten Position liegt der Dichtkörper nicht an dem Dichtungssitz an, so dass ein Durchströmen eines Bereichs zwischen Dichtkörper und Dichtungssitz möglich ist. Insbesondere liegt die erste Position in Ausströmrichtung stromabwärts von der zweiten Position.

Bevorzugt weist die Dichteinrichtung ferner eine Führung für den Dichtkörper auf, sodass der Dichtkörper entlang der Führung zwischen der ersten und zweiten Position beweglich ist. Insbesondere definiert die Führung zwischen der ersten und zweiten Position eine Bewegungsrichtung für den Dichtkörper, die bevorzugt zumindest abschnittsweise parallel zur Ausströmrichtung ist. Ferner ist es bevorzugt, dass der Dichtungssitz an einem in Ausströmrichtung stromaufwärts gelegenen Ende der Führung vorgesehen ist. Vorzugsweise ist der Dichtungssitz einstückig daran ausgebildet.

Ebenso ist es bevorzugt, dass die Führung an einem in Ausströmrichtung stromabwärts gelegenen Ende einen Anschlag aufweist, der dazu ausgelegt ist, ein Austreten des Dichtkörpers aus der Führung zu verhindern. Vorzugsweise können somit Dichtungssitz, Dichtkörper und Führung eine strukturelle Einheit bilden, die als separate Dichteinrichtung in bestehende Bremsventile eingebaut bzw. nachgerüstet werden kann. Insbesondere ist der Dichtkörper eine Kugel und die Führung ein Kugelkäfig. Vorzugsweise weist die Kugel einen geschlossenen Hohlraum auf. Dadurch wird die mittlere Dichte der Kugel, im Vergleich zur Dichte des Materials aus dem ein Mantel der Kugel gefertigt ist, gesenkt, insbesondere sodass die Kugel eine mittlere Dichte aufweist, die geringer ist als die Dichte des Fremdmediums. In alternativen Ausführungsformen ist der Dichtkörper wahlweise ein Zylinder, eine Scheibe, ein Kegel, ein Kegelstumpf oder ein Ellipsoid, wobei ein solcher alternativer Dichtkörper vorzugsweise ebenfalls einen geschlossenen Hohlraum aufweist.

In einer bevorzugten Ausführungsform weist der Kugelkäfig eine Mehrzahl an, sich in Ausströmrichtung erstreckenden, Führungsschienen auf. Ferner ist es bevorzugt, dass die erste Druckluftpassage kanalförmig ausgestaltet ist, das heißt, dass ein Querschnitt der ersten Druckluftpassage Dimensionen aufweist, die kleiner sind als die entlang der Ausströmrichtung definierte Länge der Druckluftpassage.

Es ist bevorzugt, dass das Bremsventil dazu ausgelegt ist, dass die erste Druckluftpassage in einer Einbausituation des Bremsventils zumindest abschnittsweise vertikal angeordnet ist. Beispielsweise kann so ein Aufschwimmen des Dichtkörpers auf dem Fremdmedium und eine sich daraus ergebende Bewegung des Dichtkörpers von der ersten in die zweite Position unterstützt werden. Ebenso ist es bevorzugt, dass der druckführende Abschnitt des Bremsventils in einer Einbausituation des Bremsventils oberhalb des ersten Volumens angeordnet ist. Eine Einbausituation des Bremsventils kann insbesondere den Einbau in einem Fahrzeug umfassen.

In besonders bevorzugten Ausführungsformen ist das Bremsventil ein Relaisventil.

In einem zweiten Aspekt der Erfindung wird die eingangs genannte Aufgabe durch ein Verfahren zum Verhindern von Flüssigkeitseintritt entlang einer Einströmrichtung in einen druckführenden Teil eines Bremsventils gemäß Anspruch 20 gelöst.

In einer bevorzugten Ausführungsform des Verfahrens verbringt die Flüssigkeit dadurch, dass sie den Schwellenwert überschreitet, die Dichteinrichtung in den Dichtzustand. Insbesondere wird dies, wie in Bezug auf den ersten Aspekt der Erfindung beschrieben, dadurch ermöglicht, dass eine Auftriebskraft auf die Dichteinrichtung wirkt. Bevorzugt ist die Flüssigkeit Wasser.

Es ist bevorzugt, dass das Verfahren ferner das Entlüften des druckführenden Abschnitts des Bresmventils entlang der Ausströmrichtung umfasst.

In einem dritten Aspekt der Erfindung durch ein Verfahren zur Montage eines Bremsventils gemäß Anspruch 23 gelöst. Insbesondere kann ein solches Montageverfahren vorteilhaft sein, wenn ein vorhandenes Bremsventil mit einer Dichteinrichtung mit einer in Bezug auf den ersten Aspekt der Erfindung beschriebenen Dichteinrichtung, nachgerüstet werden soll.

In einem vierten Aspekt der Erfindung wird die eingangs genannte Aufgabe durch die Verwendug einer Kugel zur Herstellung eines Dichtzustands des Bremsventils gemäß Anspruch 24 gelöst.

Weitere Merkmale, Vorteile und Unteraspekte der vorstehend beschriebenen Aspekte der Erfindung ergeben sich aus der nachfolgenden Beschreibung der Figuren, die bevorzugte Ausführungsformen der Erfindung zeigen.

Figur 1 zeigt einen Querschnitt durch ein Bremsventil eines Ausführungsbeispiels nach dem ersten Aspekt der Erfindung, wobei ein Dichtkörper in einer zweiten Position angeordnet ist.

Figur 2 zeigt den Querschnitt aus Figur 1, wobei eine erste Position des Dichtkörpers gestrichelt dargestellt ist.

Figur 3 zeigt eine Führung für einen Dichtkörper, wie sie in dem Ausführungsbeispiel der Figuren 1 und 2 sowie weiteren erfindungsgemäßen Ausführungsbeispielen verwendet werden kann.

Figur 4 zeigt einen Querschnitt des Dichtkörpers gemäß der Figur 3.

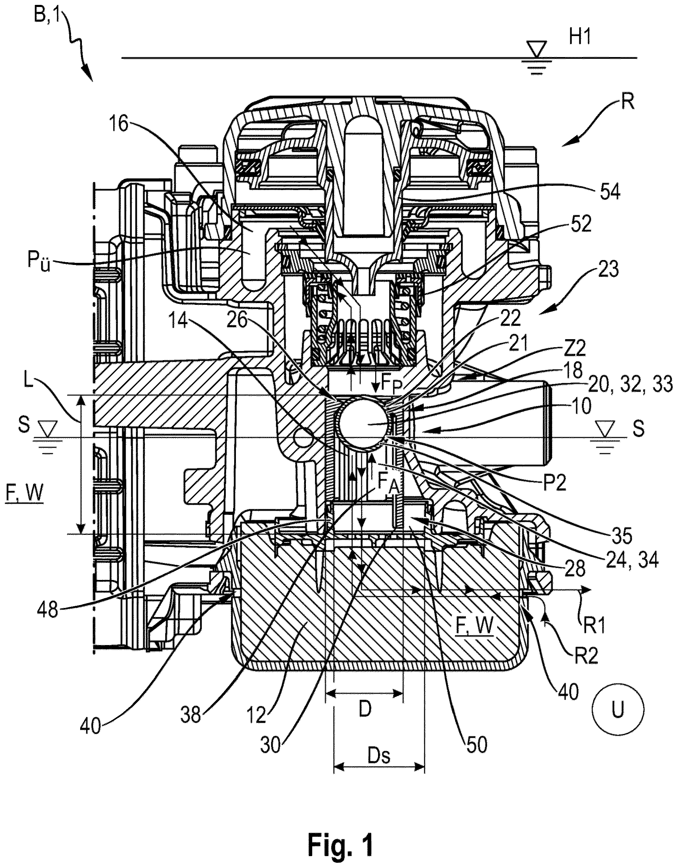

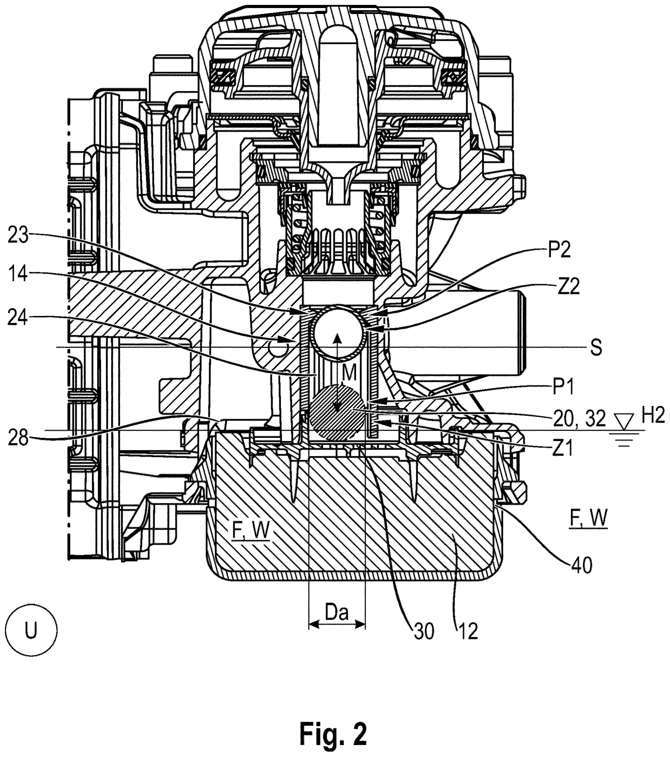

Im Nachfolgenden werden der erste, zweite, dritte und vierte Aspekt der vorliegenden Erfindung in Bezug auf ein, insbesondere in Figuren 1 und 2 dargestelltes, Ausführungsbeispiel eines erfindungsgemäßen Bremsventils nach dem ersten Aspekt der Erfindung erläutert. Wie aus der folgenden Beschreibung zu entnehmen ist, ist das gezeigte Bremsventil dazu eingerichtet, aber nicht darauf beschränkt, ein Verfahren nach dem zweiten und/oder vierten Aspekt der Erfindung durchzuführen und/oder mittels eines Verfahrens nach dem dritten Aspekt der Erfindung montiert zu werden. Es soll verstanden werden, dass die in Zusammenhang mit den Figuren 1-4 beschriebenen Merkmale und Vorteile auf alle eingangs beschriebenen Aspekte und Unteraspekte der Erfindung übertragbar sind.

Die Figuren 1 und 2 zeigen eine Pneumatikvorrichtung 1 in der Form eines erfindungsgemäßen Bremsventils mit einem Entlüftungspfad 10 in einer Einbausituation. Der Entlüftungspfad 10 ist dazu eingerichtet, einen druckführenden Teil 16 der Pneumatikvorrichtung 1 zu entlüften. Hierzu ist ein erstes Volumen 12 der Pneumatikvorrichtung 1 über eine erste Druckluftpassage 14 mit einem druckführenden Teil 16 der Pneumatikvorrichtung 1 pneumatisch verbunden. Eine zweite Druckluftpassage 40 verbindet eine Umgebung U der Pneumatikvorrichtung 1 pneumatisch mit dem ersten Volumen 12. Beim Entlüften des druckführenden Teils 16 strömt Druckluft vom druckführenden Teil 16 durch die erste Passage 14, durch das erste Volumen 12 und dann durch die zweite Druckluftpassage 40 in die Umgebung U. Der so beschriebene Strömungspfad der Druckluft folgt überwiegend einer, schematisch mittels eines zweifach abknickenden Pfeils in den Figuren 1 und 2 angedeuteten, Ausströmrichtung R1.

In Figur 1 ist in der Umgebung U eine Flüssigkeit F mit Pegelstand H1 vorhanden, sodass die gesamte Pneumatikvorrichtung 1 unterhalb des Pegelstands H1 angeordnet und von Flüssigkeit F umgeben ist. Die Pneumatikvorrichtung 1 weist einen Schwellenwert S für die Flüssigkeit F auf, der im dargestellten Ausführungsbeispiel im Bereich der zweiten Druckluftpassage 40 angeordnet ist. Da die zweite Druckluftpassage 40 unterhalb des Pegelstands H1 angeordnet ist, konnte durch die zweite Druckluftpassage 40 Flüssigkeit F in das erste Volumen 12 eindringen. Wie der Figur 1 zu entnehmen ist, befindet sich der Pegelstand H1 der Flüssigkeit F oberhalb des Schwellenwerts S. Die Flüssigkeit F füllt deshalb das erste Volumen 12 vollständig und die erste Druckluftpassage 14 zumindest soweit, dass die Flüssigkeit F den Schwellenwert S darin überschreitet.

Figur 2 zeigt die Pneumatikvorrichtung 1 aus Figur 1, wobei in dieser Darstellung eine Flüssigkeit F in der Umgebung U der Pneumatikvorrichtung 1 mit einem zweiten Pegelstand H2 vorhanden ist. Aus Gründen der besseren Lesbarkeit ist Figur 2 nicht mit allen Bezugszeichen versehen, die in Figur 1 eingetragen sind, es soll jedoch verstanden werden, dass die Figuren 1 und 2 dieselbe Pneumatikvorrichtung 1 zeigen. Der Pegelstand H2 befindet sich unterhalb des Schwellenwerts S, jedoch oberhalb der zweiten Druckluftpassage 40. Die Flüssigkeit F füllt deshalb das erste Volumen 12 annähernd vollständig bis zum Pegelstand H2, die erste Druckluftpassage 14 ist überwiegend frei von Flüssigkeit F. Der Schwellenwert S wird von der Flüssigkeit F in der Pneumatikvorrichtung 1 also nicht erreicht.

Im Ausführungsbeispiel der Figuren 1 und 2 umfasst die Pneumatikvorrichtung 1 eine Dichteinrichtung 18, die in der ersten Druckluftpassage 14 angeordnet ist. Insbesondere ist die gezeigte erste Druckluftpassage 14 ein kanalförmiger zylindrischer Verbindungsabschnitt zwischen dem ersten Volumen 12 und dem druckführenden Teil 16. Kanalförmig bedeutet in diesem Zusammenhang, dass die Länge L der ersten Druckluftpassage 14 größer als der Durchmesser D ihres Querschnitts ist. Die Ausströmrichtung R1, und die nachfolgend erläuterte Einströmrichtung R2, werden im Bereich der ersten Druckluftpassage 14 durch deren Geometrie vorgegeben, und verlaufen darin entlang der Länge L. Die dargestellte Dichteinrichtung 18 erstreckt sich über die gesamte Länge L der ersten Druckluftpassage 14.

Ferner umfasst die Dichteinrichtung 18 in den Figuren 1 und 2 einen Dichtkörper 20, eine Führung 24 für den Dichtkörper 20 und einen an einem, in Ausströmrichtung R1 stromabwärts gelegenen, Ende 28 der Führung 24 vorgesehenen Dichtungssitz 23. Der Dichtkörper 20 ist dazu ausgelegt, in einem Dichtzustand Z2 dichtend am Dichtungssitz 23 anzuliegen.

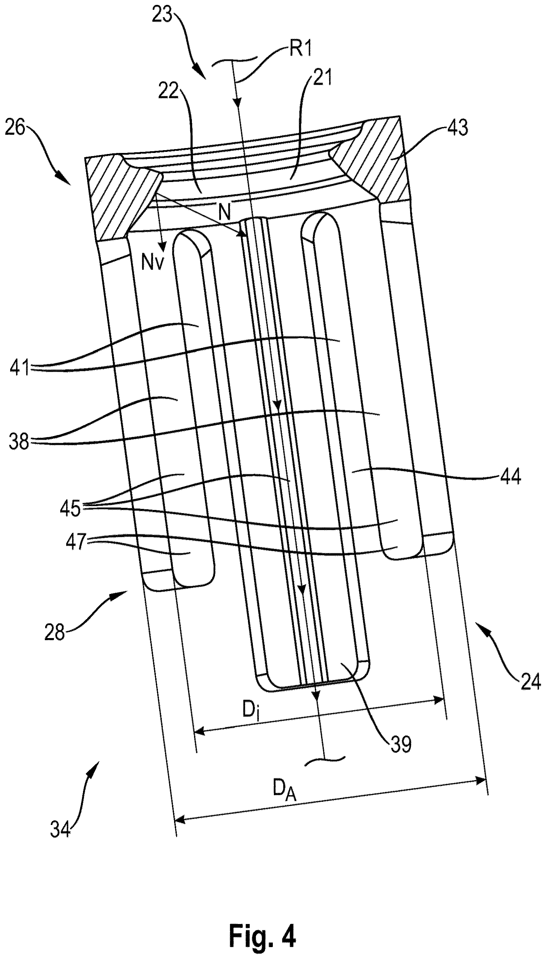

Der Dichtkörper 20 ist im gezeigten Ausführungsbeispiel eine hohle Kugel 32 und die Führung 24 ein an die Kugel 32 angepasster Kugelkäfig 34. Die Kugel 32 ist entlang des Kugelkäfigs 34 zwischen einer ersten Position P1 (in Fig. 2 dargestellt) und einer zweiten Position P2 (in Fig. 1 dargestellt) beweglich. Der Dichtungssitz 23 wird durch eine in dessen Inneren um den Kugelkäfig 34 umlaufende Fläche 22 gebildet. Die umlaufende Fläche 22 entspricht überwiegend der Mantelfläche eines Kegelstumpfs, an deren in Ausströmrichtung R1 stromabwärts gelegenen Ende die Kante 21 angeordnet ist. Der Dichtungssitz 23 weist in Ausströmrichtung R1 stromabwärts, d. h. eine Normale N auf der umlaufenden Fläche 22 hat zumindest eine Komponente Nv die parallel und gleichgerichtet mit der Ausströmrichtung R1 ist (siehe Fig. 4).

Wie eingangs beschrieben ist es für den sicheren Betrieb der Pneumatikvorrichtung 1 vorteilhaft, dass ein Eintritt der Flüssigkeit F in den druckführenden Teil 16 der Pneumatikvorrichtung 1 zuverlässig verhindert wird. Insbesondere bei einem ersten Pegelstand H1 wie in der Figur 1 könnte die Flüssigkeit F, ohne entsprechende Gegenmaßnahmen, entlang der Einströmrichtung R2 von der Umgebung U durch das erste Volumen 12, durch die erste Druckluftpassage 14, bis in den druckführenden Teil 16 ansteigen. Die Einströmrichtung R2 ist als überwiegend parallel zur Ausströmrichtung R1 verlaufender Pfeil schematisch in Figur 1 dargestellt.

Um einen solchen Wassereintritt in den druckführenden Teil 16 zu verhindern, ist die Dichteinrichtung 18 dazu ausgelegt, mindestens zwischen einem Normalzustand Z1 und einem Dichtzustand Z2 zu wechseln. In Figur 1 ist die Dichteinrichtung 18 im Dichtzustand Z2 gezeigt, in dem die Kugel 32 in der zweiten Position P2 befindlich ist. Die Position P2 liegt am in Ausströmrichtung R1 stromaufwärts gelegenen Ende 26 der Führung 24. In dieser zweiten Position P2 liegt die Kugel 32 dichtend am Dichtungssitz 23 an, im Speziellen an der Kante 21, sodass ein Durchströmen der ersten Druckluftpassage 14 in der Einströmrichtung R2 verhindert wird. Der vorzugsweise innerhalb der Kugel 32 vorgesehene geschlossene Hohlraum 33 senkt deren mittlere Dichte im Vergleich zur Dichte des Materials aus dem die Kugel 32 gefertigt ist soweit ab, dass diese auf der Flüssigkeit F schwimmfähig ist. Alternativ kann ein Füllmaterial mit einer geringen Dichte vorgesehen sein, um die Formstabilität der Kugel 32 zu erhöhen. Da die Kugel 32 in Ausströmrichtung R1 stromabwärts des Dichtungssitzes 23 im Kugelkäfig 34 angeordnet ist, presst die resultierende Auftriebskraft F_{A} die Kugel 32 dichtend gegen die Kante 21 des Dichtungssitzes 23. Wenn im Dichtzustand Z2 ein Entlüften des druckführenden Teils 16 durchgeführt wird, so kann eine aus einem Überdruck P_{Ü} im druckführenden Teil 16 auf die Kugel 32 resultierende Druckkraft F_{P}, die der Auftriebskraft F_{A} entgegen gerichtet ist, deren Betrag übersteigen. Die Kugel 32 wird somit durch die Druckkraft F_{P} für die Dauer des Entlüftungsvorganges vom Dichtungssitz 23 abgehoben, sodass Druckluft aus dem druckführenden Teil16 entlang der Ausströmrichtung R1 entlüftet werden kann. Durch die ausströmende Luft wird dann ein Eindringen von Flüssigkeit verhindert. Im Dichtzustand Z2 ist die erste Druckluftpassage 14 also nur in der Ausströmrichtung R1 durchströmbar. Anders ausgedrückt erfüllt die Dichteinrichtung 18 im Dichtzustand Z2 die Funktion eines Rückschlagventils und bildet in diesem Zustand vorzugsweise eines.

Es ist bevorzugt, dass die Größe des geschlossenen Hohlraumes 33 in der Kugel 32 entsprechend der Dichte des Materials des Mantels 35 der Kugel 32 und der Dichte der Flüssigkeit F, gegen die der druckführende Teil 16 gedichtet werden soll, angepasst ist, um eine mittlere Dichte zu erreichen, die ein Schwimmen der Kugel 34 auf der Flüssigkeit F ermöglicht. Ferner ist es bevorzugt, dass der Dichtkörper 20 durch entsprechende Anpassung seiner mittleren Dichte dazu ausgelegt ist, dass die Kugel 32 bei einem bestimmten Überdruck P_{Ü} vom Dichtungssitz 23 abhebt. Es ist bevorzugt, dass das Material der Kugel 32 auf das Material des Kugelkäfigs 34 und/oder des Dichtungssitzes 23 abgestimmt ist, um die gewünschten Dichteigenschaften zu erreichen. Wahlweise sind Kugel 32 und Kugelkäfig 34 und/oder Dichtungssitz 23 entweder aus dem gleichen oder aus unterschiedlichen Materialien gefertigt. Geeignete Materialien für Kugel 32 und Kugelkäfig 34 und/oder Dichtungssitz 23 sind beispielsweise Metalle wie Messing und Kupfer sowie deren Legierungen, insbesondere Bronze. Ebenso geeignet sind thermoplastische, duroplastische und elastomere Kunststoffe, beispielsweise Silikone, PTFE, PE, PA, PP und POM oder aus nachwachsenden Rohstoffen gewonnene Materialien wie Kautschuk oder Zellulose.

Es soll verstanden werden, dass eine Dichteinrichtung 18 gemäß der vorliegenden Erfindung nicht auf die dargestellte Ausführungsform beschränkt ist. Beispielsweise ist in weiteren Ausführungsbeispielen die erste Druckluftpassage 14 und/oder die Dichteinrichtung 18 anders als in den Figuren 1 und 2 dargestellt, nicht ausschließlich vertikal angeordnet. Damit ein Aufschwimmen des Dichtkörper 20 auf der Flüssigkeit F den Dichtkörper 20 gegen den Dichtungssitz 23 presst ist es ausreichend, wenn der Dichtungssitz 23 zumindest teilweise vertikal nach unten weisend ausgerichtet ist, d. h. dass eine Normale auf einer Fläche des Dichtungssitzes 23 zumindest eine Komponente aufweist die vertikal nach unten ausgerichtet ist. Ferner ist es möglich, dass die Dichteinrichtung 18, statt vollständig in der ersten Druckluftpassage 14 nur teilweise in der ersten Druckluftpassage 14 und/oder auf, unter oder neben der ersten Druckluftpassage 14 angeordnet ist.

Weiter soll verstanden werden, dass die Form des Dichtkörpers 20 nicht auf die gezeigte Kugel 32 beschränkt ist. So können weitere Ausführungsformen des Dichtkörpers 20 andere Formen aufweisen, beispielsweise die eines Zylinders, einer Scheibe, eines Kegels, eines Kegelstumpfs oder Ellipsoids. Ebenso ist die Form der Führung 24 nicht auf eine Linearführung, die den Dichtkörper 20 umgibt, wie sie der Kugelkäfig 34 darstellt, beschränkt. Beispielsweise ist die Führung 24 in weiteren Ausführungsformen spiralförmig ausgestaltet und/oder dazu ausgelegt, dass der Dichtkörper 20 auf oder neben der Führung 24 entlanggeführt wird. Weiter ist es denkbar, dass die Führung 24 nicht formschlüssig, wie durch den Kugelkäfig 34, sondern durch eine Kraft erfolgt, beispielsweise durch magnetische Anziehung, die den Dichtkörper 20 in Richtung des Dichtungssitzes 23 vorspannt. Ebenso ist es bevorzugt, eine Vorspannung mit einer formschlüssigen Führung 24 zu kombinieren. Insbesondere ist es bevorzugt, die gezeigte Kugel 32 mittels eines Vorspannelements, beispielsweise einer Feder, gegen den Dichtungssitz 23 vorzuspannen.

Ebenso ist der Dichtkörper 20 nicht darauf beschränkt, darin einen geschlossenen Hohlraum 33 aufzuweisen, um auf der Flüssigkeit F schwimmfähig sein. So kann der Dichtkörper 20 ganz oder teilweise aus einem Material gefertigt sein, welches eine geringere Dichte als die Flüssigkeit F aufweist. Beispielsweise kann es sich bei einem solchen Material um Schaum, insbesondere geschlossenporigen Schaum, handeln. Ebenso besteht die Möglichkeit, dass ein geschlossener Hohlraum 33 eines Dichtkörper 20 mit einem Material gefüllt ist, das eine geringere Dichte aufweist als das Material des Mantels 35 des Dichtkörpers 20. Infrage kommt insbesondere den Hohlraum 33 mit Schaum oder mit Gas zu füllen.

In der Figur 2 liegt der Pegelstand H2 der Flüssigkeit F unterhalb des Schwellenwerts S. Die Dichteinrichtung 18 befindet sich im Normalzustand Z1, in der die Kugel 32 nicht in der zweiten Position P2, sondern beispielsweise wie gezeigt in der ersten Position P1 angeordnet ist. Diese erste Position P1 der Kugel 32 ist in Figur 2 durch eine gestrichelte Darstellung gekennzeichnet und am, in Ausströmrichtung R1 stromabwärts gelegenen Ende 28 der Führung 24 angeordnet. Im Normalzustand Z1 liegt die Kugel 32 nicht am Dichtungssitz 23 an, Kugel 32 und Dichtungssitz 23 sind voneinander beabstandet. Die erste Druckluftpassage 14 ist in diesem Normalzustand Z1 sowohl in Ausströmrichtung R1 als auch in Einströmrichtung R2 durchströmbar.

Da die Kugel 32 entlang der Führung 24 entlang des Freiheitsgrads M linear beweglich und auf der Flüssigkeit F schwimmfähig ist, kann die Kugel 32 entsprechend einem Pegelstand der Flüssigkeit F, der zwischen dem zweiten Pegelstand H2 und dem Schwellenwert S liegt, jede beliebige Zwischenposition zwischen der ersten Position P1 und der zweiten Position P2 einnehmen.

Vorzugsweise ist am stromabwärts gelegenen Ende 28 der Führung 24 ein Anschlag 30 vorgesehen, der verhindert, dass die Kugel 32 aus der Führung 24 austritt, wenn der Pegelstand der Flüssigkeit F unter den eingezeichneten Pegelstand H2 sinkt. Beispielsweise kann der Anschlag 30, wie in den Figuren 1 und 2 gezeigt, ein topfförmiges Sieb sein, das dazu ausgelegt ist, ein Eintreten von in der Flüssigkeit F befindlichen Partikeln in die erste Druckluftpassage 14 zu verhindern. Solche Partikel können, wenn sie in den Bereich des Dichtungssitzes 23 gelangen, die ordnungsgemäße Dichtwirkung der Dichteinrichtung 18 beeinträchtigen.

Das gezeigte Ausführungsbeispiel ist besonders bevorzugt, da die Dichteinrichtung 18 durch das Aufschwimmen der Kugel 32 auf der Flüssigkeit F von der Flüssigkeit F selbst in die zweite Position P2, und damit vom Normalzustand Z1 in den Dichtzustand Z2 verbracht werden kann, wenn der Pegelstand der Flüssigkeit F über den Schwellenwert S steigt. Ferner ist das gezeigte Ausführungsbeispiel besonders bevorzugt, da der Schwellenwert S durch die Kombination der Anordnung des Dichtungssitzes 23 mit den Eigenschaften der Kugel 32, insbesondere deren mittleren Dichte und Durchmesser Dₐ, vorgegeben wird. Der Schwellenwert S entspricht dem Pegelstand der Flüssigkeit F im ersten Volumen 12 und/oder in der ersten Druckluftpassage 14, bei dem die Kugel 32 durch das Aufschwimmen auf der Flüssigkeit F in Kontakt mit dem Dichtungssitz 23 kommt.

In anderen bevorzugten Ausführungsformen ist die Dichteinrichtung 18 dazu ausgelegt, das Überschreiten des Schwellenwertes S durch die Flüssigkeit F mittels geeigneter Einrichtungen, wie beispielsweise Sensoren, zu detektieren und mittels geeigneter Einrichtung, beispielsweise Aktuatoren, den Dichtzustand Z2 herzustellen. In solchen und anderen Ausführungsformen ist der Schwellenwert S durch die Position eines Sensors und/oder der Messstelle des Sensors vorgegeben. Insbesondere soll verstanden werden, dass die Dichteinrichtung 18 nicht auf die gezeigte Kombination aus Führung 24, Dichtungssitz 23 und Dichtkörper 20 beschränkt ist. Jede Dichteinrichtung, die zwischen dem Normalzustand Z1 und dem Dichtzustand Z2 wechseln kann, kann die gezeigte Dichteinrichtung 18 ersetzen. So ist es möglich ein Rückschlagventil, das mittels geeigneter Einrichtungen, beispielsweise mittels elektronischer Aktuatoren, in der offenen Stellung gehalten werden kann, als Dichteinrichtung 18 einzusetzen.

Das gezeigte Ausführungsbeispiel ist auch deshalb besonders bevorzugt, da die Elemente der Dichteinrichtung 18, insbesondere die Kugel 32 und der Kugelkäfig 34, separat von der Pneumatikvorrichtung 1 vorliegen können, wobei es möglich sein kann, eine bestehende Pneumatikvorrichtung 1 mit einer Dichteinrichtung 18 gemäß der vorliegenden Erfindung nachzurüsten.

Im Ausführungsbeispiel der Figuren 1 und 2 kann das Bremsventil1 mit einem Relaisventil R für eine pneumatische Bremsanlage B ausgebildet sein, wobei die Bremsanlage B in ihrer Einbausituation in einem Nutzfahrzeug dargestellt ist. Für die weitergehende Erläuterung der Merkmale der Bremsanlage B, insbesondere des Relaisventils R, ist auf den einschlägigen Stand der Technik verwiesen. Es soll verstanden werden, dass ein Bremsventil 1 eine erste Druckluftpassage zwischen einem ersten Volumen und einem druckführenden Teil aufweist.

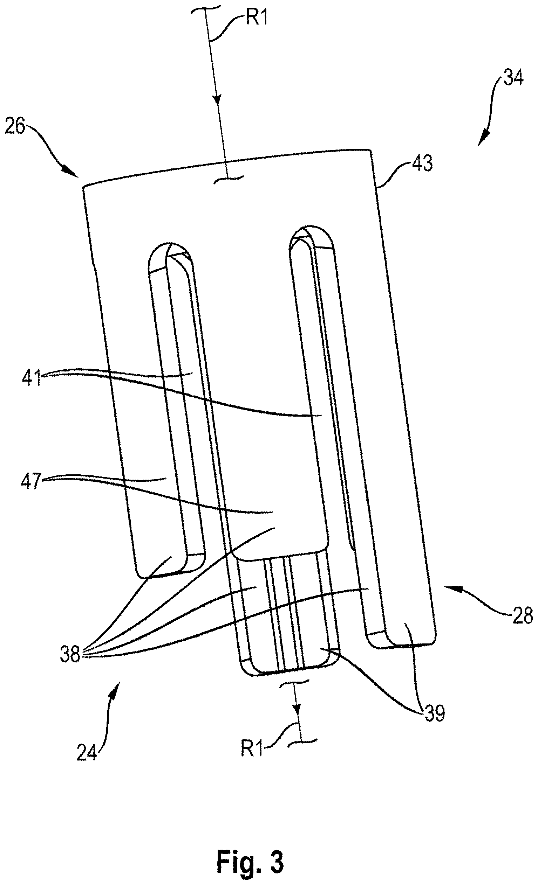

Die Figuren 3 und 4 zeigen einen Kugelkäfig 34, der als Führung 24 in der Pneumatikvorrichtung 1 der Figuren 1 und 2 verwendet wird, und auch in weiteren, nicht dargestellten, Ausführungsformen der Pneumatikvorrichtung 1 verwendet werden kann. Figur 4 ist eine Schnittansicht durch den, in Figur 3 von außen gezeigten, Kugelkäfig 34. Merkmale, die bereits in den Figuren 1 und 2 gezeigt sind, weisen in den Figuren 3 und 4 die gleichen Bezugszeichen auf. Der Kugelkäfig 34 weist eine Mehrzahl an sich vom stromabwärts in Ausströmrichtung R1 gelegenen Ende 26 erstreckenden Führungsschienen 38 auf. Am in Ausströmrichtung R1 stromabwärts gelegenen Ende 26 des Kugelkäfigs 34 weist dieser einen in Umfangsrichtung durchgängigen Abschnitt 43 auf, in dem auch der Dichtungssitz 23 mit der umlaufenden Fläche 22 und Kante 21 angeordnet ist. Die Führungsschienen 38 sind um den Umfang des Kugelkäfigs 34 angeordnet und in Umfangsrichtung voneinander beanstandet, so dass im Inneren des Kugelkäfigs 34 ein überwiegend zylindrischer Hohlraum 44 angeordnet ist, der einen Durchmesser von Dᵢ aufweist. Im Hohlraum 44 wird die Kugel 34 in ihrer Bewegung zwischen der ersten Position P1 und der zweiten Position P2 von den Führungsschienen 38 geführt.

In Umfangsrichtung ist zwischen je zwei voneinander beabstandeten Führungsschienen 38 ein Strömungskanal 41 angeordnet. Die gezeigte Ausführungsform ist besonders bevorzugt, da sie es ermöglicht, einen Außendurchmesser Dₐ der Kugel 32 (siehe Fig. 2) und den Durchmesser Dᵢ des Hohlraums 44 so zu gestalten, dass die Führung der Kugel 32 im Käfig 34 sowohl mit keinem oder nur geringen Spiel, als auch mit nur geringer Reibung erfolgt. Gleichzeitig ermöglichen die Strömungskanäle 41 im Kugelkäfig 34 ein Entlüften der Pneumatikvorrichtung 1, wobei die ausströmende Druckluft die Kugel 32 mittels der Strömungskanäle 41 umfließt.

Im dargestellten Ausführungsbeispiel (Fig. 1 bis 4) ist der Kugelkäfig 24 monolithisch gestaltet, d.h. Führungsschienen 38, durchgängiger Abschnitt 43 und Dichtungssitz 23 bestehen aus einem zusammenhängenden Stück. Insbesondere ist der monolithische Kugelkäfig 24 aus einem einzigen Material gefertigt.

In alternativen Ausführungsformen sind einzelne Abschnitte des Kugelkäfigs 24 separat gefertigt und zu dem Kugelkäfig 24 verbunden. Insbesondere ist es so möglich, die Führungsschienen 38 aus einem ersten Material zu fertigen, das ein Gleiten oder Rollen der Kugel 32 entlang der Führungsschienen 38 erleichtert, wie z.B. PTFE oder Bronze. Gleichzeitig oder alternativ besteht der Dichtungssitz 23 aus einem zweiten Material, das der Dichtwirkung zwischen Dichtungssitz 23 und Kugel 32 zuträglich ist.

Ferner ist es möglich, wenigstens die nach Innen weisenden Flächen 45 der Führungsschienen 38 mit einem Material zu beschichten, das ein Gleiten oder Rollen der Kugel 32 erleichtert. Ebenso kann der Dichtungssitz 23 mit einem Material beschichtet sein, das die Dichtwirkung verbessert.

Der Außendurchmesser D_{A} des Kugelkäfigs 34 ist auf den Querschnittsdurchmesser D der ersten Druckluftpassage 14 (siehe Fig. 1) angepasst, sodass der Kugelkäfig 34 vorzugsweise mittels einer Presspassung in der ersten Druckluftpassage 14 montierbar ist.

Im dargestellten Ausführungsbeispiel weist der Kugelkäfig 34 verlängerte Führungsschienen 39 auf, die sich in Ausströmrichtung R1 weiter erstrecken als die übrigen, kürzeren, Führungsschienen 47. Wie in Figur 1 dargestellt ist, ist der Innendurchmesser Ds des Anschlags 30 größer als der Innendurchmesser Dᵢ des Kugelkäfigs 34, und nicht koaxial mit der ersten Druckluftpassage 14, d.h. exzentrisch dazu, angeordnet. Die in Ausströmrichtung R1 stromabwärts gelegenen Enden der kürzeren Führungsschienen 47 schließen bündig mit einer Seitenwand 48 des topförmigen Anschlags 30 ab. Die verlängerten Führungsschienen 39 erstrecken sich bis in einen inneren Bereich des topfförmigen Anschlags 30, und sind so ausgerichtet, dass sie einen Bereich 50 des Anschlags 30, der nicht in direkter Flucht zum inneren Hohlraum 44 des Kugelkäfigs 34 liegt, abtrennen. Der Kugelkäfig 34 ist also so ausgestaltet, dass er ein Ausweichen der Kugel 32 in den Bereich 50 des Anschlags 30 verhindert. Somit kann verhindert werden, dass die Kugel 32 beim Ansteigen des Flüssigkeitspegels zwischen Anschlag 30 und Käfig 34 verkantet, und so eventuell an der Bewegung von der ersten Position P1 in die zweite Position P2 gehindert wird.

Im Ausführungsbeispiel der Pneumatikvorrichtung 1 ist die Flüssigkeit F gegen die der druckführende Abschnitt 16 gerichtet werden soll Wasser W. Die mittlere Dichte des Dichtkörpers 20 beträgt vorzugsweise 1000kg/m³ oder weniger, 900 kg/m³ oder weniger, 800 kg/m³ oder weniger, 700 kg/m³ oder weniger bzw. 600 kg/m³ oder weniger. Vorzugsweise weist der Dichtkörper 20 eine Dichte auf, die aus einem Intervall ausgewählt ist, das von einem Maximalwert bis 0kg/m³ definiert ist, wobei der Maximalwert vom Intervall mit eingeschlossen ist. Besonders bevorzugt ist der Maximalwert ein beliebiger Wert von 1000kg/m³ bis 0,01kg/m³.

### Bezugszeichenliste (Teil der Beschreibung)

- 1: Pneumatikvorrichtung (oder Bremsventil)
- 10: Entlüftungspfad
- 12: erstes durchströmbares Volumen
- 14: erste Druckluftpassage
- 16: druckführender Teil
- 18: Dichteinrichtung
- 20: Dichtkörper
- 21: Kante
- 22: umlaufende Fläche
- 23: Dichtungssitz
- 24: Führung
- 26: in Ausströmrichtung R1 stromaufwärts gelegenes Ende
- 28: in Ausströmrichtung R1 stromabwärts gelegenes Ende
- 30: topfförmiges Sieb, Anschlag
- 32: Kugel
- 34: Kugelkäfig
- 35: (Kugel-)Mantel
- 38: Führungsschiene
- 39: verlängerte Führungsschiene
- 40: zweite Druckluftpassage
- 41: Strömungskanal
- 43: durchgängiger Abschnitt
- 44: innerer Hohlraum
- 45: nach innen weisende Fläche
- 47: kürzere Führungsschiene
- 48: Seitenwand
- 50: Bereich der nicht in direkter Flucht zum inneren Hohlraum 44 liegt
- 52: Ventilteller
- 54: Steuerkolben
- B: pneumatische Bremsanlage
- D: Querschnittsdurchmesser der ersten Druckluftpassage 14
- D_{A}: Außendurchmesser des Kugelkäfigs 34
- Dₐ: Außendurchmesser der Kugel 32
- Dᵢ: Innendurchmesser des Hohlraums 44
- Ds: Innendurchmesser des topfförmigen Anschlags 30
- F: Flüssigkeit
- F_{A}: Auftriebskraft
- F_{P}: Druckkraft
- H1: erster Pegelstand
- H2: zweiter Pegelstand
- L: Länge der ersten Druckluftpassage 14
- N: Normalenvektor
- Nv: vertikale Komponente von Normalenvektor N
- P_{Ü}: Überdruck
- P1: erste Position
- P2: zweite Position
- R: Relaisventil
- R1: Ausströmrichtung
- R2: Einströmrichtung
- S: Schwellenwert
- U: Umgebung
- W: Wasser
- Z1: Normalzustand
- Z2: Dichtzustand

## Patentansprüche

1. Bremsventil (1) für eine pneumatische Bremsanlage für Fahrzeuge mit mindestens einem Entlüftungspfad (10) zum Entlüften des Bremsventils (1) entlang einer Ausströmrichtung (R1), wobei der Entlüftungspfad (10) umfasst:
ein durchströmbares erstes Volumen (12);
eine erste Druckluftpassage (14) die das erste Volumen (12) mit einem druckführenden Abschnitt (16) des Bremsventils (1) pneumatisch verbindet;
eine Dichteinrichtung (18), die dazu ausgelegt ist, mindestens zwischen einem Normalzustand (Z1) und einem Dichtzustand (Z2) zu wechseln;
wobei die erste Druckluftpassage (14) im Normalzustand (Z1) der Dichteinrichtung (18) sowohl in der Ausströmrichtung (R1), als auch in einer entgegen gerichteten Einströmrichtung (R2) durchströmbar ist, und wobei die erste Druckluftpassage (14) im Dichtzustand (Z2) der Dichteinrichtung (18) nur in der Ausströmrichtung (R1) durchströmbar ist, nicht aber in der Einströmrichtung (R2), wobei die Dichteinrichtung (18) im Dichtzustand (Z2) die Funktion eines Rückschlagventils erfüllt und in diesem Zustand ein Rückschlagventil bildet.

2. Bremsventil (1) nach Anspruch 1, wobei die Dichteinrichtung (18) dazu ausgelegt ist, wenn eine Flüssigkeit (F) im ersten Volumen und/oder in der ersten Druckluftpassage (12) einen Schwellenwert (S) überschreitet, vom Normalzustand (Z1) in den Dichtzustand (Z2) zu wechseln.

3. Bremsventil (1) nach Anspruch 2, wobei die Flüssigkeit (F) Wasser (W) ist.

4. Bremsventil (1) nach einem der vorstehenden Ansprüche, wobei die Dichteinrichtung (18) in der ersten Druckluftpassage (14) angeordnet ist.

5. Bremsventil (1) nach einem der vorstehenden Ansprüche, wobei die Dichteinrichtung (18) einen Dichtkörper (20) und einen Dichtungssitz (22) umfasst, wobei der Dichtkörper (20) dazu ausgelegt ist im Dichtzustand (Z2) dichtend am Dichtungssitz (23) anzuliegen.

6. Bremsventil (1) nach Anspruch 5, wobei der Dichtkörper (20) dazu ausgelegt ist, auf Wasser (W) schwimmfähig zu sein.

7. Bremsventil (1) nach einem der Ansprüche 5 oder 6, wobei der Dichtkörper (20) eine mittlere Dichte von 900 kg/m³ oder weniger aufweist.

8. Bremsventil (1) nach einem der Ansprüche 5 bis 7, wobei der Dichtkörper (20) in Ausströmrichtung (R1) stromabwärts vom Dichtungssitz (23) angeordnet ist.

9. Bremsventil (1) nach einem der Ansprüche 5 bis 8, wobei der Dichtkörper (20) zwischen einer ersten Position (P1) und einer zweiten Position (P2) beweglich ist, wobei der Dichtkörper im Normalzustand (Z1) die erste Position (P1), und im Dichtzustand (Z2) die zweite Position (P2) einnimmt.

10. Bremsventil (1) nach Anspruch 9, wobei die erste Position (P1) in Ausströmrichtung (R1) stromabwärts von der zweiten Position (P2) ist.

11. Bremsventil (1) nach einem der Ansprüche 9 oder 10 wobei die Dichteinrichtung (18) ferner eine Führung (24) für den Dichtkörper (20) aufweist, so dass der Dichtkörper (20) entlang der Führung (24) zwischen der ersten (P1) und der zweiten Position (P2) beweglich ist.

12. Bremsventil (1) nach Anspruch 11, wobei die Führung (24) an einem in Ausströmrichtung (R1) stromabwärts gelegenen Ende (28) einen Anschlag (30) aufweist, der dazu ausgelegt ist, ein Austreten des Dichtkörpers (20) aus der Führung (24) zu verhindern.

13. Bremsventil (1) nach einem der Ansprüche 5 bis 12 wobei der Dichtkörper (20) eine Kugel (32) und die Führung (24) ein Kugelkäfig (34) ist.

14. Bremsventil (1) nach Anspruch 13, wobei der Kugelkäfig (34) eine Mehrzahl an, sich in Ausströmrichtung (R1) erstreckenden, Führungsschienen (38) aufweist.

15. Bremsventil (1) nach einem der vorstehenden Ansprüche, wobei die erste Druckluftpassage (14) kanalförmig ausgestaltet ist.

16. Bremsventil (1) nach einem der vorstehenden Ansprüche, wobei das Bremsventil (1) dazu ausgelegt ist, dass die erste Druckluftpassage (14) in einer Einbausituation des Bremsventils (1) zumindest abschnittsweise vertikal angeordnet ist.

17. Bremsventil (1) nach einem der vorstehenden Ansprüche, wobei das Bremsventil (1) dazu ausgelegt ist, dass die erste Druckluftpassage (14) ein kanalförmiger zylindrischer Verbindungsabschnitt zwischen dem ersten Volumen (12) und dem druckführenden Abschnitt (16) ist.

18. Bremsventil (1) nach einem der vorstehenden Ansprüche, wobei der Entlüftungspfad (10) ferner eine zweite Druckluftpassage (40) umfasst, die das erste Volumen (12) pneumatisch mit einer Umgebung (U) des Bremsventils (1) verbindet.

19. Bremsventil (1) nach einem der vorstehenden Ansprüche, wobei das Bremsventil (1) ein Relaisventil (R) ist.

20. Verfahren zum Verhindern von Flüssigkeitseintritt in einen druckführenden Abschnitt (16) eines Bremsventils (1) nach einem der Ansprüche 1 bis 19 entlang einer Einströmrichtung (R2), wobei das Verfahren umfasst:
Bereitstellen von Flüssigkeit (F) oberhalb eines Schwellenwerts (S) im ersten Volumen und/oder in der ersten Druckluftpassage (12) des Bremsventils (1);
Verbringen der Dichteinrichtung (18) von dem Normalzustand (Z1) in den Dichtzustand (Z2);
wobei im Normalzustand (Z2) die erste Druckluftpassage (14), die das erste Volumen (12) mit dem druckführenden Abschnitt (16) des Bremsventils (1) pneumatisch verbindet, sowohl in der Einströmrichtung (R2) als auch in einer entgegen gerichteten Ausströmrichtung (R1) durchströmbar ist;
und wobei im Dichtzustand (Z2) die erste Druckluftpassage (14) nur in der Ausströmrichtung (R1) durchströmbar ist, nicht aber in der Einströmrichtung (R2), wobei die Dichteinrichtung (18) im Dichtzustand (Z2) die Funktion eines Rückschlagventils erfüllt und in diesem Zustand ein Rückschlagventil bildet.

21. Verfahren nach Anspruch 20, wobei die Flüssigkeit (F) mittels des Überschreitens des Schwellenwerts (S) im ersten Volumen (12) die Dichteinrichtung (18) in den Dichtzustand (Z2) verbringt.

22. Verfahren nach einem der Ansprüche 20 oder 21, ferner umfassend:
Entlüften des druckführenden Abschnitts (16) des Bremsventils (1) entlang der Ausströmrichtung (R1).

23. Verfahren zur Montage eines Bremsventils (1) nach einem der Ansprüche 1 bis 19, wobei das Verfahren umfasst:
Anordnen der Dichteinrichtung (18) in der ersten Druckluftpassage (14) des Bremsventils (1);
wobei die erste Druckluftpassage (14) das erste Volumen (12) des Bremsventils (1) und den druckführenden Abschnitt (16) des Bremsventils (1) pneumatisch verbindet;
wobei die Dichteinrichtung (18) dazu ausgelegt ist, mindestens zwischen dem Normalzustand (Z1) und dem Dichtzustand (Z2) wechseln zu können;
wobei die erste Druckluftpassage (14) im Normalzustand (Z1) der Dichteinrichtung (18) sowohl in der Ausströmrichtung (R1), als auch in einer entgegen gerichteten Einströmrichtung (R2), durchströmbar ist; und wobei die erste Druckluftpassage (14) im Dichtzustand (Z2) der Dichteinrichtung (18) nur in der Ausströmrichtung (R1) durchströmbar ist, nicht aber in der Einströmrichtung (R2), wobei die Dichteinrichtung (18) im Dichtzustand (Z2) die Funktion eines Rückschlagventils erfüllt und in diesem Zustand ein Rückschlagventil bildet.

24. Verwendung einer Kugel (32) zur Herstellung eines Dichtzustands (Z2) eines Bremsventils (1) nach einem der Ansprüche 1 bis 19 ausgehend von einem Normalzustand (Z1) des Bremsventils (1), wobei der Dichtzustand (Z2) einen Eintritt von Flüssigkeit (W) in den druckführenden Abschnitt (16) des Bremsventils (1) verhindert.

## Claims

1. A brake valve (1) for a pneumatic brake system for vehicles with at least one venting path (10) for venting the brake valve (1) along an outflow direction (R1), wherein the venting path (10) comprises:
a first volume (12), through which a flow can pass;
a first compressed air passage (14), which pneumatically connects the first volume (12) to a pressurized section (16) of the brake valve (1);
a sealing device (18), which is designed to change at least between a normal state (Z1) and a sealed state (Z2);
wherein, when the sealing device (18) is in the normal state (Z1), the first compressed air passage (14) can be flowed through both in the outflow direction (R1) and in an opposite inflow direction (R2), and wherein, when the sealing device (18) is in the sealed state (Z2), the first compressed air passage (14) can be flowed through only in the outflow direction (R1) but not in the inflow direction (R2), wherein the sealing device (18) in the sealed state (Z2) fulfills the function of a check valve and forms a check valve in this state.

2. The brake valve (1) according to claim 1, wherein the sealing device (18) is designed to change from the normal state (Z1) to the sealed state (Z2) when a fluid (F) in the first volume and/or in the first compressed air passage (12) exceeds a threshold value (S).

3. The brake valve (1) according to claim 2, wherein the fluid (F) is water (W).

4. The brake valve (1) according to any of the preceding claims, wherein the sealing device (18) is arranged in the first compressed air passage (14).

5. The brake valve (1) according to any of the preceding claims, wherein the sealing device (18) comprises a sealing body (20) and a sealing seat (22), wherein the sealing body (20) is designed to rest sealingly against the sealing seat (23) in the sealed state (Z2).

6. The brake valve (1) according to claim 5, wherein the sealing body (20) is designed to be buoyant on water (W).

7. The brake valve (1) according to any of claims 5 or 6, wherein the sealing body (20) has an average density of 900 kg/m³ or less.

8. The brake valve (1) according to any of claims 5 to 7, wherein the sealing body (20) is arranged downstream of the sealing seat (23) in the outflow direction (R1).

9. The brake valve (1) according to any of claims 5 to 8, wherein the sealing body (20) is movable between a first position (P1) and a second position (P2), wherein the sealing body assumes the first position (P1) in the normal state (Z1) and the second position (P2) in the sealed state (Z2).

10. The brake valve (1) according to claim 9, wherein the first position (P1) is downstream of the second position (P2) in the outflow direction (R1).

11. The brake valve (1) according to either of claims 9 or 10, wherein the sealing device (18) further comprises a guide (24) for the sealing body (20) so that the sealing body (20) is movable along the guide (24) between the first (P1) and the second position (P2).

12. The brake valve (1) according to claim 11, wherein the guide (24) has a stop (30), which is designed to prevent the sealing body (20) from escaping from the guide (24), at an end (28) located downstream in the outflow direction (R1).

13. The brake valve (1) according to any of claims 5 to 12, wherein the sealing body (20) is a ball (32) and the guide (24) is a ball cage (34).

14. The brake valve (1) according to claim 13, wherein the ball cage (34) has a plurality of guide rails (38) extending in the outflow direction (R1).

15. The brake valve (1) according to any of the preceding claims, wherein the first compressed air passage (14) is designed in the shape of a channel.

16. The brake valve (1) according to any of the preceding claims, wherein the brake valve (1) is designed such that the first compressed air passage (14) is arranged vertically at least in sections when the brake valve (1) is in an installation situation.

17. The brake valve (1) according to any of the preceding claims, wherein the brake valve (1) is designed such that the first compressed air passage (14) is a channel-shaped cylindrical connecting section between the first volume (12) and the pressurized section (16).

18. The brake valve (1) according to any of the preceding claims, wherein the venting path (10) further comprises a second compressed air passage (40), which pneumatically connects the first volume (12) to an environment (U) of the brake valve (1).

19. The brake valve (1) according to any of the preceding claims, wherein the brake valve (1) is a relay valve (R).

20. A method for preventing fluid entry into a pressurized section (16) of a brake valve (1) according to any of claims 1 to 19 along an inflow direction (R2), wherein the method comprises:
Providing fluid (F) above a threshold value (S) in the first volume and/or in the first compressed air passage (12) of the brake valve (1);
Moving the sealing device (18) from the normal state (Z1) to the sealed state (Z2);
wherein, in the normal state (Z2), the first compressed air passage (14), which pneumatically connects the first volume (12) to the pressurized section (16) of the brake valve (1), can be flowed through both in the inflow direction (R2) and in an opposite outflow direction (R1);
and wherein, in the sealed state (Z2), the first compressed air passage (14) can be flowed through only in the outflow direction (R1) but not in the inflow direction (R2), wherein the sealing device (18) in the sealed state (Z2) fulfills the function of a check valve and forms a check valve in this state.

21. The method according to claim 20, wherein the fluid (F) moves the sealing device (18) to the sealed state (Z2) by the threshold value (S) being exceeded in the first volume (12).

22. The method according to either of claims 20 or 21, further comprising:
Venting the pressurized section (16) of the brake valve (1) along the outflow direction (R1).

23. A method for assembling a brake valve (1) according to any of claims 1 to 19, wherein the method comprises:
Arranging the sealing device (18) in the first compressed air passage (14) of the brake valve (1);
wherein the first compressed air passage (14) pneumatically connects the first volume (12) of the brake valve (1) and the pressurized section (16) of the brake valve (1);
wherein the sealing device (18) is designed to be able to change at least between the normal state (Z1) and the sealed state (Z2);
wherein, when the sealing device (18) is in the normal state (Z1), the first compressed air passage (14) can be flowed through both in the outflow direction (R1) and in an opposite inflow direction (R2); and wherein, when the sealing device (18) is in the sealed state (Z2), the first compressed air passage (14) can be flowed through only in the outflow direction (R1) but not in the inflow direction (R2), wherein the sealing device (18) in the sealed state (Z2) fulfills the function of a check valve and forms a check valve in this state.

24. A use of a ball (32) for producing a sealed state (Z2) of a brake valve (1) according to any of claims 1 to 19 starting from a normal state (Z1) of the brake valve (1), wherein the sealed state (Z2) prevents entry of fluid (W) into the pressurized section (16) of the brake valve (1).

## Revendications

1. Soupape de frein (1) pour un système de freinage pneumatique pour véhicules, comportant au moins une voie de ventilation (10) destinée à ventiler la soupape de frein (1) le long d'une direction d'écoulement de sortie (R1), dans laquelle la voie de ventilation (10) comprend :
un premier volume (12) pouvant être traversé par un écoulement ;
un premier passage d'air comprimé (14) qui relie pneumatiquement le premier volume (12) à une section conductrice de pression (16) de la soupape de frein (1) ;
un dispositif d'étanchéité (18) qui est conçu pour passer au moins d'un état normal (Z1) à un état d'étanchéité (Z2) ;
dans laquelle le premier passage d'air comprimé (14) peut être traversé par un écoulement, à l'état normal (Z1) du dispositif d'étanchéité (18), aussi bien dans la direction d'écoulement de sortie (R1) que dans une direction d'écoulement d'entrée (R2) opposée, et dans laquelle le premier passage d'air comprimé (14), à l'état d'étanchéité (Z2) du dispositif d'étanchéité (18), ne peut être traversé par un écoulement que dans la direction d'écoulement de sortie (R1), et non dans la direction d'écoulement d'entrée (R2), dans laquelle le dispositif d'étanchéité (18), à l'état d'étanchéité (Z2), remplit la fonction d'une soupape antiretour et forme, dans ledit état, une soupape antiretour.

2. Soupape de frein (1) selon la revendication 1, dans laquelle le dispositif d'étanchéité (18) est conçu pour passer de l'état normal (Z1) à l'état d'étanchéité (Z2) lorsqu'un liquide (F) dans le premier volume et/ou dans le premier passage d'air comprimé (12) dépasse une valeur seuil (S).

3. Soupape de frein (1) selon la revendication 2, dans laquelle le liquide (F) est de l'eau (W).

4. Soupape de frein (1) selon l'une des revendications précédentes, dans laquelle le dispositif d'étanchéité (18) est agencé dans le premier passage d'air comprimé (14).

5. Soupape de frein (1) selon l'une des revendications précédentes, dans laquelle le dispositif d'étanchéité (18) comprend un corps d'étanchéité (20) et un siège d'étanchéité (22), dans laquelle le corps d'étanchéité (20) est conçu pour reposer de manière étanche sur le siège d'étanchéité (23), à l'état d'étanchéité (Z2).

6. Soupape de frein (1) selon la revendication 5, dans laquelle le corps d'étanchéité (20) est conçu pour être flottant sur l'eau (W).

7. Soupape de frein (1) selon l'une des revendications 5 ou 6, dans laquelle le corps d'étanchéité (20) présente une densité moyenne inférieure ou égale à 900 kg/m³.

8. Soupape de frein (1) selon l'une des revendications 5 à 7, dans laquelle le corps d'étanchéité (20) est agencé en aval du siège d'étanchéité (23) dans la direction d'écoulement de sortie (R1).

9. Soupape de frein (1) selon l'une des revendications 5 à 8, dans laquelle le corps d'étanchéité (20) est mobile entre une première position (P1) et une seconde position (P2), dans laquelle le corps d'étanchéité adopte la première position (P1) à l'état normal (Z1), et la seconde position (P2) à l'état d'étanchéité (Z2).

10. Soupape de frein (1) selon la revendication 9, dans laquelle la première position (P1) est en aval de la seconde position (P2) dans la direction d'écoulement de sortie (R1).

11. Soupape de frein (1) selon l'une des revendications 9 ou 10, dans laquelle le dispositif d'étanchéité (18) présente en outre un guide (24) pour le corps d'étanchéité (20), de sorte que le corps d'étanchéité (20) est mobile le long du guide (24) entre la première (P1) et la seconde position (P2).

12. Soupape de frein (1) selon la revendication 11, dans laquelle le guide (24) présente, à une extrémité (28) située en aval dans la direction d'écoulement de sortie (R1), une butée (30) qui est conçue pour empêcher le corps d'étanchéité (20) de sortir du guide (24).

13. Soupape de frein (1) selon l'une des revendications 5 à 12 dans laquelle le corps d'étanchéité (20) est une bille (32) et le guide (24) est une cage à billes (34).

14. Soupape de frein (1) selon la revendication 13, dans laquelle la cage à billes (34) présente une pluralité de rails de guidage (38) s'étendant dans la direction d'écoulement de sortie (R1).

15. Soupape de frein (1) selon l'une des revendications précédentes, dans laquelle le premier passage d'air comprimé (14) est réalisé en forme de canal.

16. Soupape de frein (1) selon l'une des revendications précédentes, dans laquelle la soupape de frein (1) est conçue pour que le premier passage d'air comprimé (14) soit agencé verticalement, au moins dans certaines sections, dans une situation de montage de la soupape de frein (1).

17. Soupape de frein (1) selon l'une des revendications précédentes, dans laquelle la soupape de frein (1) est conçue pour que le premier passage d'air comprimé (14) soit une section de liaison cylindrique en forme de canal entre le premier volume (12) et la section conductrice de pression (16).

18. Soupape de frein (1) selon l'une des revendications précédentes, dans laquelle la voie de ventilation (10) comprend en outre un second passage d'air comprimé (40) qui relie pneumatiquement le premier volume (12) à un environnement (U) de la soupape de frein (1).

19. Soupape de frein (1) selon l'une des revendications précédentes, dans laquelle la soupape de frein (1) est une soupape relais (R).

20. Procédé permettant d'empêcher une entrée de liquide dans une section conductrice de pression (16) d'une soupape de frein (1) selon l'une des revendications 1 à 19, le long d'une direction d'écoulement d'entrée (R2), dans lequel le procédé comprend :
la fourniture d'un liquide (F) au-dessus d'une valeur seuil (S) dans le premier volume et/ou dans le premier passage d'air comprimé (12) de la soupape de frein (1) ;
le déplacement du dispositif d'étanchéité (18) de l'état normal (Z1) à l'état d'étanchéité (Z2) ;
dans lequel, à l'état normal (Z2), le premier passage d'air comprimé (14), qui relie pneumatiquement le premier volume (12) à la section conductrice de pression (16) de la soupape de frein (1), peut être traversé par un écoulement aussi bien dans la direction d'écoulement d'entrée (R2) que dans une direction d'écoulement de sortie (R1) opposée ;
et dans lequel, à l'état d'étanchéité (Z2), le premier passage d'air comprimé (14) ne peut être traversé par un écoulement que dans la direction d'écoulement de sortie (R1), et non dans la direction d'écoulement d'entrée (R2), dans lequel le dispositif d'étanchéité (18) remplit la fonction d'une soupape antiretour à l'état d'étanchéité (Z2) et forme, dans ledit état, une soupape antiretour.

21. Procédé selon la revendication 20, dans lequel le liquide (F) amène le dispositif d'étanchéité (18) à l'état d'étanchéité (Z2) au moyen du dépassement de la valeur seuil (S) dans le premier volume (12).

22. Procédé selon l'une des revendications 20 ou 21, comprenant en outre :
la ventilation de la section conductrice de pression (16) de la soupape de frein (1) le long de la direction d'écoulement de sortie (R1).

23. Procédé permettant le montage d'une soupape de frein (1) selon l'une des revendications 1 à 19, dans lequel le procédé comprend :
l'agencement du dispositif d'étanchéité (18) dans le premier passage d'air comprimé (14) de la soupape de frein (1) ;
dans lequel le premier passage d'air comprimé (14) relie pneumatiquement le premier volume (12) de la soupape de frein (1) et la section conductrice de pression (16) de la soupape de frein (1) ;
dans lequel le dispositif d'étanchéité (18) est conçu pour pouvoir passer au moins de l'état normal (Z1) à l'état d'étanchéité (Z2) ;
dans lequel le premier passage d'air comprimé (14) peut être traversé par un écoulement, à l'état normal (Z1) du dispositif d'étanchéité (18), aussi bien dans la direction d'écoulement de sortie (R1) que dans une direction d'écoulement d'entrée (R2) opposée ; et dans lequel le premier passage d'air comprimé (14), à l'état d'étanchéité (Z2) du dispositif d'étanchéité (18), ne peut être traversé par un écoulement que dans la direction d'écoulement de sortie (R1), et non dans la direction d'écoulement d'entrée (R2), dans lequel le dispositif d'étanchéité (18), à l'état d'étanchéité (Z2), remplit la fonction d'une soupape antiretour et forme, dans ledit état, une soupape antiretour.

24. Utilisation d'une bille (32) pour l'obtention d'un état d'étanchéité (Z2) d'une soupape de frein (1) selon l'une des revendications 1 à 19 à partir d'un état normal (Z1) de la soupape de frein (1), dans laquelle l'état d'étanchéité (Z2) empêche une entrée de liquide (W) dans la section conductrice de pression (16) de la soupape de frein (1).
